# EUROPEAN PATENT SPECIFICATION

(11) **EP 2 978 648 B1**
(45) Date of publication and mention of the grant of the patent: **21.11.2018**
(21) Application number: 14712325.1
(22) Date of filing: 26.03.2014
(51) Int. Cl.: B60W 30/095, G08G 1/16

(54) **LATERAL COLLISION AVOIDANCE CONTROL SYSTEM AND METHOD FOR A VEHICLE**
STEUERUNGSSYSTEM UND -VERFAHREN ZUR VERMEIDUNG SEITLICHER KOLLISIONEN FÜR EIN FAHRZEUG
SYSTÈME ET PROCÉDÉ DE COMMANDE D'ÉVITEMENT DE COLLISION DANS LE SENS LATÉRAL POUR UN VÉHICULE

(30) Priority: 26.03.2013 GB 201305443
(43) Date of publication of application: 03.02.2016
(73) Proprietor: Jaguar Land Rover Limited, Coventry, Warwickshire CV3 4LF (GB)
(72) Inventor: DUNOYER, Alain, Coventry Warwickshire CV3 4LF (GB); EDWARDS, Chris, Coventry Warwickshire CV3 4LF (GB); DAWSON, Mark, Coventry Warwickshire CV3 4LF (GB)
(74) Representative: Chang, Seon Hee
(86) International application number: PCT/EP2014/056096
(87) International publication number: WO 2014/154771

(56) References cited:
- EP-A1- 1 898 232
- WO-A1-2007/145564
- US-A1- 2011 234 390
- US-A1- 2012 271 539

## Description

### TECHNICAL FIELD

The present invention relates to vehicle control systems and to a method of controlling a vehicle. In particular but not exclusively, embodiments of the present invention relate to a vehicle control system for preventing collision of one vehicle with another. Aspects of the invention relate to a system, to a method and to a vehicle.

### BACKGROUND

It is known to provide a vehicle lateral collision avoidance system for preventing lateral collision of vehicles, for example when a driver executes a lane change manoeuvre. The vehicle is configured to sense the presence of an overtaking vehicle and illuminate a lamp on a wing mirror of the vehicle. Such systems are configured to provide a relatively subtle indication of the presence of an overtaking vehicle, since the system could otherwise be distracting to a driver.

WO2007/145564 discloses one example of such a lateral collision avoidance system.

A problem with known systems is that the subtlety of the system may reduce its effectiveness at warning a driver of the presence of an overtaking vehicle.

It is an aim of the present invention to address disadvantages associated with the prior art.

### SUMMARY OF THE INVENTION

Embodiments of the invention may be understood with reference to the appended claims.

Aspects of the present invention provide an apparatus, a vehicle and a method as claimed.

Embodiments of the present invention have the advantage that the system may be configured only to provide feedback to the driver when the system detects the existence of a collision hazard and in addition that a lane change manoeuvre is intended. Consequently, the system may provide more distracting feedback to the driver since feedback is only provided when a collision risk is high. The obstacle may be another vehicle that is attempting to overtake the subject vehicle. Embodiments of the present invention provide a substantially more effective system for preventing lateral collisions between vehicles.

By detecting the intention of the driver of the vehicle to change from the first lane to the second lane, the system can provide more appropriate feedback in the case that a collision risk is high. Such feedback may be required to be significantly more obtrusive than a warning provided by a so-called lane departure warning system, which is operable to provide a warning in response to an unintentional departure of a vehicle from a lane, e.g. due to driver drowsiness or distraction. In contrast, the system of the above-mentioned aspect is operable alert the driver of a possible collision in the event that the driver intends to perform a particular manoeuvre. The system of the above-mentioned aspect may be provided in combination with a lane departure warning system. Accordingly, appropriate feedback/warnings may be provided in dependence on whether the departure of a vehicle from a lane is determined to be as a result of a manoeuvre intended by the driver or due to unintended vehicle movement with respect to the lane.

According to a first aspect of the invention there is provided a lateral collision avoidance system for a motor vehicle, the system being operable to monitor a position of a vehicle with respect to a first lane of a road occupied by the vehicle, detect the existence of an obstacle representing a collision hazard in a second lane adjacent the first, detect an intention of the driver of the vehicle to change from the first lane to the second lane, and provide feedback to the driver, by application of a force to a steering wheel of the vehicle, if the system detects the existence of the collision hazard in the second lane and in addition the system detects an intention of the driver to change from the first lane to the second lane, characterised in that the system is operable to monitor, substantially continuously, a magnitude of torque applied by the driver to the steering wheel, and provide the feedback in dependence on a feedback parameter, which is indicative of driver steering behaviour over a period prior to feedback being provided, wherein said feedback parameter is determined in dependence on a signal indicative of the magnitude of torque applied to the steering wheel by the driver over said period, the system being operable to provide feedback by application of opposing torque to the steering wheel in a direction opposing the lane change, the value of the opposing torque being determined in dependence on the feedback parameter.

The feedback parameter may comprise an average power spectra density of a torque sensor output signal during said period.

The feedback parameter may be determined in dependence on one or more of; a position of the vehicle relative to a reference position of the first lane, a width of the first lane and a curvature of the first lane. The system may be operable to provide feedback which guides the vehicle with respect to the reference position of the first lane. The system may be operable to provide feedback which guides the vehicle to the centre of the first lane.

The system may be configured to monitor the position of the vehicle with respect to the first lane by means of a camera device.

The system may be operable to determine, by means of the camera device, a position of the vehicle within the first lane; a width of the first lane; and a curvature of the lane.

The system may be operable to detect an intention of the driver of the vehicle to change from the first lane to the second lane in dependence at least in part on the driver steering input.

The system may be operable to detect an intention of the driver of the vehicle to change from the first lane to the second lane in dependence at least in part on the operation of a vehicle turn indicator.

The system may be operable to provide feedback to the driver when the system detects an intention of the driver to change from the first lane to the second lane and the system detects the presence of the obstacle in the second lane abeam the vehicle.

By the term "abeam" is meant that at least a portion of a length of a vehicle in the second lane overlaps at least a portion of a length of the subject vehicle.

The system may be operable to provide feedback to the driver when the system detects an intention of the driver to change from the first lane to the second lane and the system detects the presence of the obstacle in the second lane within a prescribed distance of the subject vehicle.

The system may be operable to determine whether the obstacle presents a collision risk in dependence on a relative location and speed of travel of the obstacle.

The system may be operable to provide feedback in the form of an audible and/or visual alert.

The system may be operable to provide feedback by reducing an amount of torque assist in the direction of the lane change.

In a further aspect of the invention for which protection is sought there is provided a motor vehicle comprising a system as described in the preceding paragraphs.

According to a further aspect of the invention there is provided a method of avoiding lateral collision between vehicles implemented by a control system, the method comprising monitoring a position of a vehicle with respect to a first lane of a road occupied by the vehicle, detecting the existence of an obstacle representing a collision hazard in a second lane adjacent the first, detecting an intention of the driver of the vehicle to change from the first lane to the second lane, and providing feedback to the driver, by application of a force to a steering wheel of the vehicle, if a collision hazard exists in the second lane and an intention of the driver to change from the first lane to the second lane is detected, characterised in that the method comprises monitoring, substantially continuously, a magnitude of torque applied by the driver to the steering wheel, determining a feedback parameter, indicative of driver steering behaviour over a period prior to feedback being provided, in dependence on a signal indicative of the magnitude of torque applied to the steering wheel by the driver over said period, and providing feedback in dependence on said feedback parameter by applying opposing torque to the steering wheel in a direction opposing the lane change, the value of the opposing torque being determined in dependence on the feedback parameter.

Within the scope of this application it is expressly intended that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

For the avoidance of doubt, it is to be understood that features described with respect to one aspect of the invention may be included within any other aspect of the invention, alone or in appropriate combination with one or more other features.

### BRIEF DESCRIPTION OF THE DRAWINGS

One or more embodiments of the invention will now be described, by way of example only, with reference to the accompanying figures in which:
FIGURE 1 is a schematic illustration of a motor vehicle according to an embodiment of the present invention;
FIGURE 2 shows a scenario in which an overtaking vehicle is abeam a vehicle to its left;
FIGURE 3 illustrates application of opposing torque to steering wheel of a vehicle as a function of vehicle position as a vehicle executes a lane change manoeuvre;
FIGURE 4 illustrates the functioning of a decision engine of a lateral collision avoidance controller according to an embodiment of the present invention; and
FIGURE 5 is a plot of opposing torque applied to a steering wheel of a vehicle as a function of time in order to alert a driver to the risk of a lateral collision.

### DETAILED DESCRIPTION

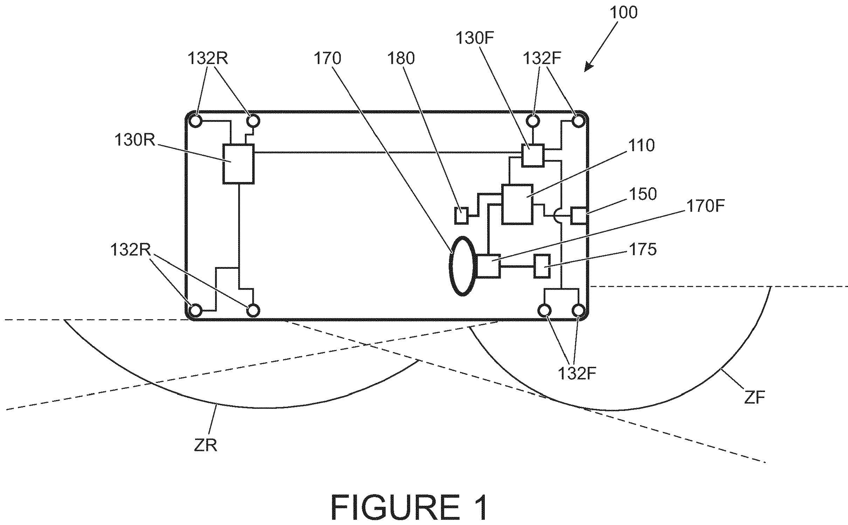

FIG. 1 shows a vehicle 100 according to an embodiment of the present invention. The vehicle 100 has a steering wheel 170 connected to a steering controller 170F. The steering controller 170F forms part of an electric power assisted steering (EPAS) system. The controller 170F is operable to vary an amount of torque that a user is required to apply to the steering wheel 170 in order to effect steering of steerable road wheels of the vehicle 100. The controller 170F provides torque assist to assist the driver in turning the steering wheel 170, reducing the amount of torque that would otherwise be required to be provided by the user. The controller is configured to decrease the amount of torque assist provided in dependence on a speed of travel of the vehicle 100 in a known manner.

The vehicle 100 is equipped with a collision avoidance controller 110. The controller 110 is configured to receive data from a camera system 150 and front and rear radar controllers 130F, 130R as described in more detail below. The controller 110 is operable to determine when a driver intends to make a lane change manoeuvre and to provide feedback to the driver in the event the controller 110 determines the manoeuvre could result in a lateral collision with an obstacle such as an overtaking vehicle.

The camera system 150 is forward facing and captures images of a road ahead of the vehicle. The camera system 150 detects lane markings in the images and is configured to determine whether the vehicle 100 is driving on a suitable multilane road such as a multilane motorway, i.e. a road having more than one lane assigned to traffic travelling in the direction in which the vehicle 100 is travelling. If the controller 110 determines that this is the case, the controller 110 monitors (a) a position of the vehicle within a lane in which the vehicle is travelling with respect to a reference position of the lane, the reference position in the present embodiment being a centreline of the lane; (b) a width of the lane; and (c) a curvature of the lane. It is to be understood that in an alternative embodiment the controller 110 may monitor continually parameters (a) to (c) above, but only take action in the event it is determined by the controller 110 that the vehicle 100 is travelling on a suitable multilane road.

The radar controllers 130F, 130R are each connected to respective forward and rear radar transmit/receive (TX/RX) modules 132F, 132R. The TX/RX modules 132F, 132R are configured to detect the presence of obstacles ahead of, to the side of and rearward of the vehicle 100. In FIG. 1, a zone of detection ZF of forward right-hand TX/RX modules 132F is shown, together with a zone of detection ZR of rearward right-hand TX/RX modules 132R.

The radar control modules 130F, 130R provide data to the collision avoidance controller 110 indicative of the location and relative speed of detected obstacles. The collision avoidance controller 110 is operable to employ this data in determining whether a collision risk exists between the vehicle 100 and an obstacle when the collision avoidance controller 110 detects that the driver wishes to change lane. In some embodiments only the rear radar controller 130R provides data to the collision avoidance controller 110. In some embodiments the front and rear radar controllers 130F, 130R provide data to the collision avoidance controller 110 but the collision avoidance controller 110 only determines whether a collision risk between the vehicle 100 and an obstacle by reference to data from the rear radar controller 130R when the collision avoidance controller 110 detects that the driver wishes to change lane. Other arrangements are also useful.

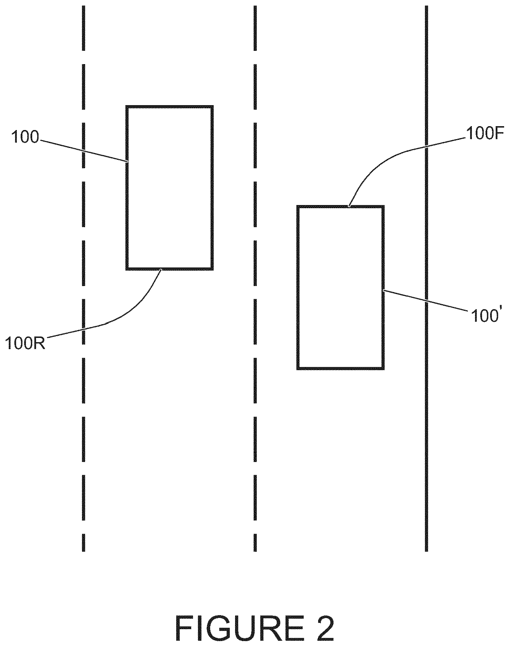

From the signals received from the radar modules 130F, 130R, the collision avoidance controller 110 is operable to determine whether an obstacle is currently located in a lane directly adjacent the vehicle 100. If an obstacle is located in a directly adjacent lane, the controller 110 determines whether a portion of the object is directly abeam the vehicle 100. By directly abeam is meant a location which, if maintained, would result in a lateral collision if the vehicle 100 were to move directly sideways (laterally) towards the obstacle. By way of illustration, FIG. 2 shows the vehicle 100 being overtaken by an overtaking vehicle 100'. At the instant positions shown, the overtaking vehicle 100' is abeam the vehicle 100 because a front face 100F of the overtaking vehicle 100' is forward of a rear face 100R of the subject vehicle 100.

If an obstacle is located in the directly adjacent lane but is not abeam the vehicle 100, the controller 110 determines how much time must elapse before the object will have at least a portion thereof abeam the vehicle 100. This calculation is performed based on instantaneous relative speeds of the vehicle 100 and obstacle. This information is used to determine whether a risk of collision with an obstacle exists when the controller 110 determines that the driver has commenced a lane change manoeuvre.

In determining whether the driver has commenced a lane change manoeuvre, the controller 110 is configured to monitor driver behaviour during the course of a journey. The controller 110 monitors a variation of lateral vehicle position with respect to the reference position (in the present embodiment the reference position is the centreline of the lane as noted above) as a function of time. The controller 110 monitors a rate of change of the lateral position of the vehicle as a function of time and a variance of lateral vehicle position over time. If at any time the controller 110 determines that vehicle lateral position has exceeded a distance substantially equal to the variance from the mean position and the vehicle is still moving in a direction away from the reference position, the controller 110 determines whether an obstacle is present in the adjacent lane abeam the vehicle 100, or whether an object is likely to be in such a location when the vehicle 100 crosses the lane boundary. The latter determination is made based on data in respect of current speed and location of any obstacles rearward of the vehicle 100. If the controller 110 determines that this is the case, and that a collision risk exists unless the driver takes corrective action, the controller 110 monitors the magnitude of the rate of change of steering angle that will be required in order to prevent the vehicle 100 from crossing the lane boundary.

Once the magnitude of the rate of change of steering angle required exceeds a predetermined value, the collision avoidance controller 110 commands the steering wheel controller 170F to apply a bias torque to the steering wheel 170 in a direction against the lane change manoeuvre, to encourage the driver to discontinue the lane change manoeuvre. Thus the controller 110 commands the provision of haptic feedback to the driver via the steering wheel 170.

In the event that the controller 110 intervenes and takes action to prevent a lateral collision in this manner, the controller 110 is operable to cancel the intervention when one or more of three conditions are met: (a) the vehicle has resumed a position within a prescribed distance of the reference position of the lane in which it was travelling; (b) the controller 110 has determined that the driver wishes to override intervention by the controller 110; and (c) a prescribed period of time has elapsed since the controller 110 intervened. The prescribed period may be any suitable period such as 5s, 10s, 15s or any other suitable value.

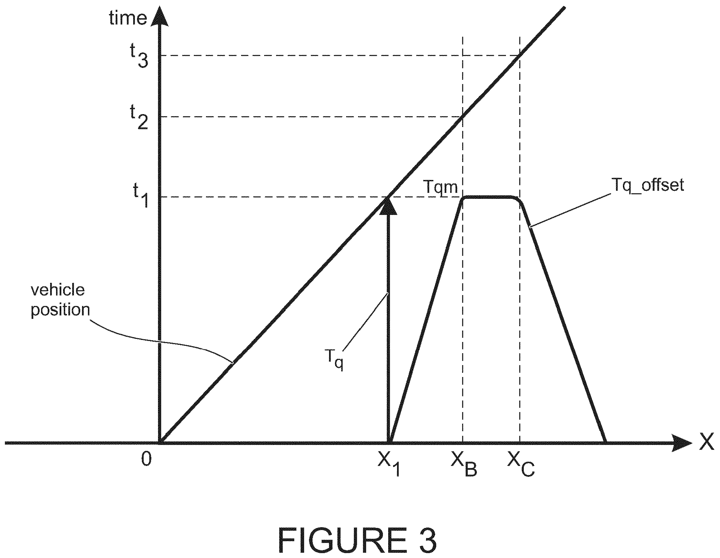

In respect of condition (b), the controller 110 may determine that the driver wishes to override the intervention if the driver opposes the bias torque applied by the controller 110 in order to continue the lane change manoeuvre. If the driver opposes the bias torque for longer than a period of 2s the controller cancels application of the bias torque. This scenario is illustrated in FIG. 3.

FIG. 3 is a plot of vehicle position x relative to a lane centreline (x=0) as a function of time. A boundary between the lane the vehicle 100 is occupying and an immediately adjacent lane is located at x=xB.

Also shown in FIG. 3 is a plot of an amount of torque applied to the steering wheel 170 as a function of time t under the command of the controller 110 in response to a determination that the driver is attempting to change lane and a collision hazard exists in the lane the driver is attempting to move into. This torque may be referred to as a torque offset tq_offset.

At time t1 a distance x1 of the vehicle 100 from the lane centreline begins to exceed a distance substantially equal to the variance of vehicle position from the mean position and the vehicle is still moving in a direction away from the lane centreline. The controller 110 has also determined that a lateral collision risk exists in respect of an obstacle that has been detected in the adjacent lane if the vehicle 100 continues the lane change manoeuvre. In the present embodiment, the controller 110 has determined that an object in the adjacent lane will be abeam the vehicle 100 within a prescribed period of time if that object and the vehicle 100 continue at their current speeds. In the present embodiment the prescribed period is 5s although other values are also useful.

Accordingly, the steering wheel controller 170F begins at time t1 to apply a torque to the steering wheel 170 in a direction opposing the direction of lane change. The controller 170F ramps the torque applied from substantially zero at time t1 to a maximum value Tqm at time t2. In the example scenario illustrated, the driver counters the opposing torque applied by the steering wheel controller 170F and continues the lane change manoeuvre. The steering wheel controller 170F detects that the driver has countered the opposing torque, and after a prescribed period t3-t1 the controller 110 commands the steering controller 170F to cease application of opposing torque. The controller 170F responds by ramping the amount of opposing torque to zero. The lateral position of the vehicle 100 at time t3 is a distance xc from the centreline of the lane from which the vehicle 100 is moving.

In the present embodiment the controller 110 is configured to command the steering wheel controller 170F to cease application of opposing torque in the event that it is determined that the driver has resisted the opposing torque and continued the lane change manoeuvre for a period exceeding 3s. Other values are also useful.

The present applicant has identified that drivers may have different sensitivities to the application of bias torque opposing the direction of a lane change. Furthermore, the same driver may have a different sensitivity at different times during the course of a journey. Thus, the controller 110 is configured to apply an amount of bias torque to coach a driver against continuing a lane change manoeuvre in dependence on sensitivity of the driver to bias torque at a given moment.

In order to achieve this, the controller 110 is configured to monitor, substantially continuously, a magnitude of a torque applied by the driver to the steering wheel 170 when the driver turns the wheel 170.

It is to be understood that, when steering a vehicle, drivers tend to move the steering wheel alternately in opposite directions substantially continually. This behaviour is observed even when a driver is attempting to maintain travel in a substantially straight line. The present applicant has found that drivers who turn the wheel relatively forcefully in each direction, applying relatively large amounts of torque, generally require a relatively large value of bias torque in order to coach them away from a potential collision.

In contrast, drivers who turn the wheel in a relatively gentle manner, applying relatively low amounts of torque, generally require a relatively low value of bias torque in order to coach them away from a potential collision.

Accordingly, the controller 110 is arranged to obtain an indication of the amount of torque applied to the steering wheel 170 by the driver by reference to a torque sensor output signal provided by the steering controller 170F. The steering controller 170F monitors the instantaneous position of the steering wheel 170 and a steering rack of the vehicle 100 as a function of time and compares the instantaneous position of the steering rack with a nominal expected position for the instant steering wheel position. It is found that a difference in correspondence increases with torque applied to the steering wheel 170, thereby providing a measure of the torque applied to the steering wheel 170.

The controller 110 monitors substantially continuously a power spectral density of the torque sensor output signal and determines a value of average power spectral density over the preceding 60s. The value of average power spectra density over the preceding 60s is updated substantially continuously. It is to be understood that other values of time period over which power spectral density is measured are also useful such as 30s, 45s, 75s, 90s or any other suitable value.

In the event that the controller 110 determines that intervention is required in order to alert the driver of the vehicle 100 to a potential lateral collision risk, the value of opposing torque that the controller 110 commands the steering controller 170F to apply is calculated in dependence on the average power spectral density of the torque sensor output signal. The value of the opposing torque commanded increases with increasing average power spectral density of the torque sensor output signal. In order to facilitate implementation of this function, the controller 110 determines a torque offset correction factor in dependence on the value of the average power spectral density of the torque sensor output signal. The larger the value of average power spectral density, the larger the value of the torque offset correction factor. In order to determine the value of opposing torque to be applied to the steering wheel 170, a reference or baseline value of opposing torque is multiplied by the correction factor to arrive at the value to be applied. Other arrangements are also useful.

It is to be understood that the magnitude of the opposing torque may be calculated in further dependence on curvature of the road at the instant location of the vehicle. The amount of opposing torque may increase with increasing curvature.

In some embodiments, cancellation of intervention by the controller 110 to alert a driver to a lateral collision risk may be implemented in addition or instead by pressing an override control button, or by any other suitable means.

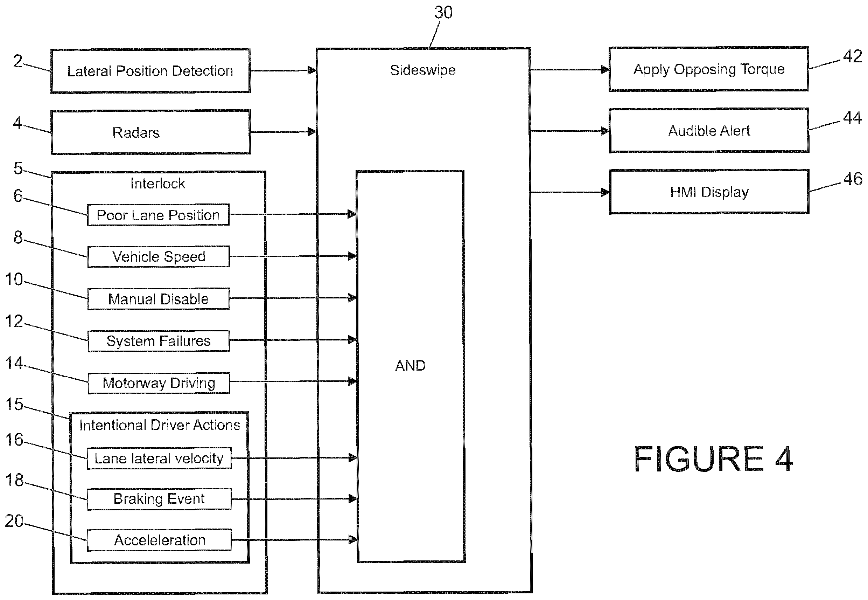

FIG. 4 illustrates functionality of the collision avoidance controller 110. The controller 110 is operable to implement a decision engine 30 that determines whether intervention is required by the controller 110 in response to a lateral collision risk. The decision engine 30 receives a number of inputs, in dependence on which the decision engine 30 determines a required action.

The decision engine 30 receives a first input 2 from the camera system 150 in respect of a lateral position of the vehicle 100 within a lane occupied by the vehicle 100. The decision engine 30 also receives data 4 from the radar controller 130R in respect of the location of obstacles to the side of and rearward of the vehicle 100.

The decision engine 30 also receives a set of interlock inputs 5, in dependence on which the decision engine 30 either allows or denies intervention. If any one of the interlock inputs 5 is set to logical 1, the decision engine 30 does not allow intervention.

The interlock inputs 5 are: (a) a poor lane position input 6, being set to logical 1 in the event that the vehicle 100 has not maintained a position that is within a prescribed distance of a centreline of the lane for more than a prescribed period of time, indicating poor lane position; (b) a vehicle speed input 8, being set to logical 1 in the event the vehicle speed is not within a prescribed operating range; (c) a manual disable input 10, being set to logical 1 in the event it is determined that a user has manually disabled the system by means of a disable control, optionally by means of a menu implemented in software; (d) a system failure input 12, being set to logical 1 in the event it is determined that the system is not functioning correctly; (e) a motorway driving input 14, being set to logical 1 in the event that a motorway driving detection algorithm determines that the vehicle 100 is not currently driving on the correct type of road; and a set of intentional driver action inputs 15. The intentional driver action inputs 15 are (a) a lane lateral velocity input 16, being set to logical 1 in the event that a lateral velocity of the vehicle 100 exceeds a prescribed value as determined by means of a lateral acceleration sensor; (b) a braking event input signal 18, being set to logical 1 in the event that a braking system of the vehicle 100 is actuated (by a driver or other vehicle system); and (c) an acceleration input signal 20, being set to logical 1 in the event that a rate of change of accelerator pedal position exceeds a prescribed value.

If the decision engine 30 determines that none of the interlock inputs 5 are set to logical 1, the controller 110 is operable to command one of three intervention actions 42, 44, 46 in the event a risk of collision is detected. The intervention actions 42, 44, 46 are: (a) an application of opposing torque action 42 in which the controller 110 commands application of torque to the steering wheel 170 in a direction against the lane change as described above (or in some embodiments reduces an amount of torque assist provided); (b) an audible alert action 44 in which an audible alert is sounded to alert a user to the collision risk; and (c) an HMI display action 46 in which an alert is displayed on an HMI (human machine interface) display 180; the display action 46 may be shown for example on an instrument pack cluster (IPC).

In some embodiments, in addition to or instead of one or more of the actions 42-46 described above, the controller 110 may be operable to provide other haptic feedback to the driver indicating that the controller 110 has determined that the driver has initiated a lane change manoeuvre that may result in collision with an obstacle.

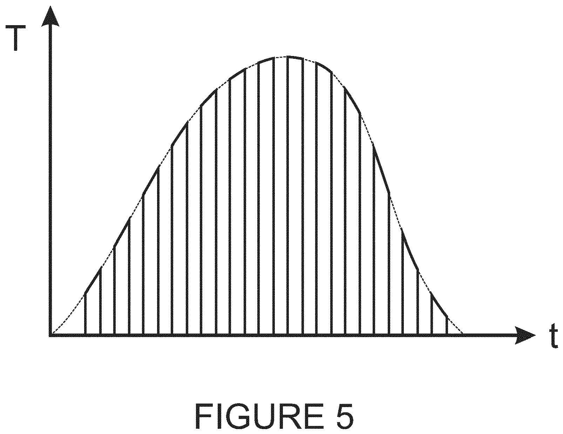

In one embodiment, the haptic feedback takes the form of a series of pulses of torque that are applied to the steering wheel 170 in a direction against that in which the lane change manoeuvre is taking place. The series of pulses are arranged to increase in magnitude and then decrease, so as not to cause vehicle instability. FIG. 5 illustrates the form of variation of torque T applied by the controller 170F as a function of time in one such embodiment.

In an alternative embodiment, in addition or instead the steering wheel controller 170F reduces the amount of torque assist provided to the driver in turning the steering wheel 170 in the direction of the lane change manoeuvre. The reduction in torque assist is slewed in some embodiments, the slew rate being a function of the existing torque applied by the steering controller 170F. This feature prevents an abrupt change occurring in the amount of torque a driver is required to apply to the steering wheel 170 when the vehicle is cornering and an obstacle is detected in an adjacent lane. It is to be understood that in some embodiments the amount of torque assist provided to the driver in turning the steering wheel in the opposite direction, against the direction of the lane change, may remain the same as before, i.e. it is not reduced.

By torque assist is meant the torque assistance provided by a power assisted steering system (PAS) when a driver initiates movement of the steering wheel. By reducing the amount of torque assistance the driver may be coached into reducing steering in the direction of the lane change. However, it is to be understood that in the present embodiment the system does not manoeuvre the vehicle forcibly by turning the steering wheel 170 against the direction in which the driver is turning the steering wheel. Other arrangements are also useful.

In an embodiment, the collision avoidance controller 110 is operable to determine that a driver wishes to initiate a lane change manoeuvre in dependence on a state of a turn indicator. Thus, if the driver activates a turn indicator and the controller 110 has determined the vehicle 100 is operating on a suitable multilane road, the controller 110 checks whether a collision risk exists with an obstacle in the lane into which the driver intends to move the vehicle 100. The controller 110 does this by checking whether an obstacle is currently located in that lane abeam the vehicle 100, and whether an obstacle is approaching from behind the vehicle 100 in that lane and which may be located abeam the vehicle 100 by the time the vehicle 100 has executed the lane change manoeuvre.

In a similar manner to that described above, if the controller 110 determines that a risk of collision exists, the controller 110 is operable to command three intervention actions 42, 44, 46 as illustrated in FIG. 4 and described above. The intervention actions 42, 44, 46 are intended to dissuade the driver from continuing the lane change manoeuvre.

Embodiments of the present invention have the advantage that feedback may be provided to a driver in a reliable manner in the event a risk of lateral collision with another vehicle exists. Since the feedback is only provided when a risk of lateral collision exists, the feedback may be more intense and distracting than known systems which alert a driver each time a passing vehicle is detected in a blindspot of the driver.

Aspects of the present invention provide a motor vehicle control system that may assist in reducing a risk of collision of a subject vehicle with an overtaking vehicle when the subject vehicle changes lanes into the path of the overtaking vehicle. It is particularly suited to multilane highway (or motorway) environments where a driver of the subject vehicle may not see an overtaking vehicle before commencing a lane change manoeuver. The oncoming vehicle may for example be positioned in a blind spot of the subject vehicle. In one embodiment a camera system monitors the road ahead in order to detect a lane change whilst a radar system monitors objects (or obstacles) such as other vehicles behind and to the side of the subject vehicle. If a risk of lateral collision or side-swipe is particularly high the system may provide feedback to the driver alerting the driver to the presence of the collision hazard. In one embodiment, feedback is only provided if the risk of collision is sufficiently high and the system detects that the driver has commenced a lane change manoeuvre. Embodiments of the present invention have the advantage that an alert may only be provided in only in these circumstances. The alert can therefore be more distracting to a driver than might otherwise be the case for systems that provide alerts regardless of whether a lane change manoeuvre is detected. The alert may be in the form of haptic feedback. The alert may involve a reduction in torque assist by a power assisted steering system in the direction of the lane change manoeuvre only, coaching a driver to abandon the lane change manoeuver.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A lateral collision avoidance system for a motor vehicle (100), the system being operable to:
monitor a position of a vehicle (100) with respect to a first lane of a road occupied by the vehicle (100);
detect the existence of an obstacle representing a collision hazard in a second lane adjacent the first;
detect an intention of the driver of the vehicle (100) to change from the first lane to the second lane; and
provide feedback to the driver, by application of a force to a steering wheel (170) of the vehicle (100), if the system detects the existence of the collision hazard in the second lane and in addition the system detects an intention of the driver to change from the first lane to the second lane,
**characterised in that** the system is operable to:
monitor, substantially continuously, a magnitude of torque applied by the driver to the steering wheel (170); and
provide the feedback in dependence on a feedback parameter, which is indicative of driver steering behaviour over a period prior to feedback being provided, wherein said feedback parameter is determined in dependence on a signal indicative of the magnitude of torque applied to the steering wheel (170) by the driver over said period,
the system being operable to provide feedback by application of opposing torque to the steering wheel (170) in a direction opposing the lane change, the value of the opposing torque being determined in dependence on the feedback parameter.

2. A system according to claim 1, wherein said feedback parameter comprises an average power spectra density of a torque sensor output signal during said period.

3. A system according to any preceding claim, configured to monitor the position of the vehicle (100) with respect to the first lane by means of a camera device (150).

4. A system according to claim 3 operable to determine, by means of the camera device (150), a position of the vehicle (100) within the first lane; a width of the first lane; and a curvature of the lane.

5. A system according to any preceding claim further operable to monitor a driver steering input, the system being operable to detect an intention of the driver of the vehicle (100) to change from the first lane to the second lane in dependence at least in part on the driver steering input.

6. A system according to any preceding claim operable to detect an intention of the driver of the vehicle (100) to change from the first lane to the second lane in dependence at least in part on the operation of a vehicle turn indicator.

7. A system according to any preceding claim operable to provide feedback to the driver when the system detects an intention of the driver to change from the first lane to the second lane and the system detects the presence of the obstacle in the second lane abeam the vehicle (100).

8. A system according to any preceding claim operable to provide feedback to the driver when the system detects an intention of the driver to change from the first lane to the second lane and the system detects the presence of the obstacle in the second lane within a prescribed distance of the subject vehicle (100).

9. A system according to claim 7 or claim 8 operable to determine whether the obstacle presents a collision risk in dependence on a relative location and speed of travel of the obstacle.

10. A system according to any preceding claim operable to provide feedback in the form of an audible and/or visual alert.

11. A system according to any preceding claim operable to provide feedback by reducing an amount of torque assist in the direction of the lane change.

12. A motor vehicle (100) comprising a system according to any preceding claim.

13. A method of avoiding lateral collision between vehicles implemented by a control system, the method comprising:
monitoring a position of a vehicle (100) with respect to a first lane of a road occupied by the vehicle (100);
detecting the existence of an obstacle representing a collision hazard in a second lane adjacent the first;
detecting an intention of the driver of the vehicle (100) to change from the first lane to the second lane, and
providing feedback to the driver, by application of a force to a steering wheel (170) of the vehicle (100), if a collision hazard exists in the second lane and an intention of the driver to change from the first lane to the second lane is detected,
**characterised in that** the method comprises:
monitoring, substantially continuously, a magnitude of torque applied by the driver to the steering wheel (170);
determining a feedback parameter, indicative of driver steering behaviour over a period prior to feedback being provided, in dependence on a signal indicative of the magnitude of torque applied to the steering wheel (170) by the driver over said period; and
providing feedback in dependence on said feedback parameter by applying opposing torque to the steering wheel (170) in a direction opposing the lane change, the value of the opposing torque being determined in dependence on the feedback parameter.

## Patentansprüche

1. Vermeidungssystem für einen seitlichen Zusammenstoß für ein Kraftfahrzeug (100), wobei das System für Folgendes betriebsfähig ist:
Überwachen einer Position eines Fahrzeugs (100) bezogen auf eine erste Spur einer Straße, die durch das Fahrzeug (100) eingenommen wird;
Erfassen der Existenz eines Hindernisses, das eine Zusammenstoßgefahr auf einer zweiten Spur, die neben der ersten ist, darstellt;
Erfassen eines Vorhabens des Fahrers des Fahrzeugs (100), von der ersten Spur auf die zweite Spur zu wechseln; und
Bereitstellen einer Rückmeldung durch Anwenden einer Kraft auf ein Lenkrad (170) des Fahrzeugs (100) an den Fahrer, falls das System die Existenz der Zusammenstoßgefahr auf der zweiten Spur erfasst und das System zusätzlich ein Vorhaben des Fahrers erfasst, von der ersten Spur auf die zweite Spur zu wechseln,
**dadurch gekennzeichnet, dass** das System für Folgendes betriebsfähig ist:
im Wesentlichen durchgängiges Überwachen einer Drehmomentgröße, die durch den Fahrer auf das Lenkrad (170) angewendet wird; und
Bereitstellen der Rückmeldung in Abhängigkeit von einem Rückmeldungsparameter, der das Lenkverhalten des Fahrers über einen Zeitraum, bevor die Rückmeldung bereitgestellt wird, anzeigt, wobei der Rückmeldungsparameter in Abhängigkeit von einem Signal bestimmt wird, das die Drehmomentgröße, die durch den Fahrer über den Zeitraum auf das Lenkrad (170) angewendet wird, anzeigt,
wobei das System betriebsfähig ist, eine Rückmeldung durch Anwenden eines entgegengesetzten Drehmoments auf das Lenkrad (170) in einer Richtung, die dem Spurwechsel entgegengesetzt ist, bereitzustellen, wobei der Wert des entgegengesetzten Drehmoments in Abhängigkeit von dem Rückmeldungsparameter bestimmt wird.

2. System nach Anspruch 1, wobei der Rückmeldungsparameter durchschnittliche Leistungsdichtespektren eines Drehmomentsensorausgabesignals während des Zeitraums umfasst.

3. System nach einem der vorhergehenden Ansprüche, konfiguriert, um die Position des Fahrzeugs (100) bezogen auf die erste Spur durch eine Kameravorrichtung (150) zu überwachen.

4. System nach Anspruch 3, betriebsfähig, um durch die Kameravorrichtung (150) Folgendes zu bestimmen: eine Position des Fahrzeugs (100) innerhalb der ersten Spur; eine Breite der ersten Spur; und eine Krümmung der Spur.

5. System nach einem der vorhergehenden Ansprüche, ferner betriebsfähig, eine Fahrerlenkeingabe zu überwachen, wobei das System betriebsfähig ist, ein Vorhaben des Fahrers des Fahrzeugs (100), von der ersten Spur auf die zweite Spur zu wechseln, in Abhängigkeit wenigstens zum Teil von der Fahrerlenkeingabe zu erfassen.

6. System nach einem der vorhergehenden Ansprüche, betriebsfähig, ein Vorhaben des Fahrers des Fahrzeugs (100), von der ersten Spur auf die zweite Spur zu wechseln, in Abhängigkeit wenigstens zum Teil von dem Betrieb eines Fahrzeugblinkers zu erfassen.

7. System nach einem der vorhergehenden Ansprüche, betriebsfähig, eine Rückmeldung an den Fahrer bereitzustellen, wenn das System ein Vorhaben des Fahrers erfasst, von der ersten Spur auf die zweite Spur zu wechseln, und das System die Gegenwart des Hindernisses auf der zweiten Spur querab des Fahrzeugs (100) erfasst.

8. System nach einem der vorhergehenden Ansprüche, betriebsfähig, eine Rückmeldung an den Fahrer bereitzustellen, wenn das System ein Vorhaben des Fahrers erfasst, von der ersten Spur auf die zweite Spur zu wechseln, und das System die Gegenwart des Hindernisses auf der zweiten Spur innerhalb einer vorgeschriebenen Entfernung des Subjektfahrzeugs (100) erfasst.

9. System nach Anspruch 7 oder 8, betriebsfähig, in Abhängigkeit von einem relativen Standort und einer Fahrtgeschwindigkeit des Hindernisses zu bestimmen, ob das Hindernis eine Zusammenstoßgefahr darstellt.

10. System nach einem der vorhergehenden Ansprüche, betriebsfähig, eine Rückmeldung in der Form eines hörbaren und/oder sichtbaren Alarms bereitzustellen.

11. System nach einem der vorhergehenden Ansprüche, betriebsfähig, eine Rückmeldung durch Verringern einer Menge an Drehmomentunterstützung in die Richtung des Spurwechsels bereitzustellen.

12. Kraftfahrzeug (100), ein System nach einem der vorhergehenden Ansprüche umfassend.

13. Verfahren zum Verhindern eines seitlichen Zusammenstoßes zwischen Fahrzeugen, das durch ein Steuersystem umgesetzt wird, wobei das Verfahren Folgendes umfasst:
Überwachen einer Position eines Fahrzeugs (100) bezogen auf eine erste Spur einer Straße, die durch das Fahrzeug (100) eingenommen wird;
Erfassen der Existenz eines Hindernisses, das eine Zusammenstoßgefahr auf einer zweiten Spur, die neben der ersten ist, darstellt;
Erfassen eines Vorhabens des Fahrers des Fahrzeugs (100), von der ersten Spur auf die zweite Spur zu wechseln, und
Bereitstellen einer Rückmeldung durch Anwenden einer Kraft auf ein Lenkrad (170) des Fahrzeugs (100) an den Fahrer, falls eine Zusammenstoßgefahr auf der zweiten Spur besteht und ein Vorhaben des Fahrers, von der ersten Spur auf die zweite Spur zu wechseln, erfasst wird,
**dadurch gekennzeichnet, dass** das Verfahren ferner Folgendes umfasst:
im Wesentlichen durchgängiges Überwachen einer Drehmomentgröße, die durch den Fahrer auf das Lenkrad (170) angewendet wird;
Bestimmen eines Rückmeldungsparameters, der das Fahrerlenkverhalten über einen Zeitraum, bevor die Rückmeldung bereitgestellt wird, anzeigt, in Abhängigkeit von einem Signal, das die Drehmomentgröße, die durch den Fahrer über den Zeitraum auf das Lenkrad (170) angewendet wird, anzeigt; und
Bereitstellen einer Rückmeldung in Abhängigkeit von dem Rückmeldungsparameter durch Anwenden eines entgegengesetzten Drehmoments auf das Lenkrad (170) in einer Richtung, die dem Spurwechsel entgegengesetzt ist, wobei der Wert des entgegengesetzten Drehmoments in Abhängigkeit von dem Rückmeldungsparameter bestimmt wird.

## Revendications

1. Système d'évitement de collision dans le sens latéral pour un véhicule à moteur (100), le système servant à :
surveiller une position d'un véhicule (100) par rapport à une première voie d'une route occupée par le véhicule (100) ;
détecter l'existence d'un obstacle représentant un risque de collision dans une deuxième voie adjacente à la première ;
détecter une intention du conducteur du véhicule (100) de passer de la première voie à la deuxième voie ; et
fournir une rétroaction au conducteur, par l'application d'une force à un volant de direction (170) du véhicule (100) si le système détecte l'existence du risque de collision dans la deuxième voie et en outre le système détecte une intention du conducteur de passer de la première voie à la deuxième voie,
**caractérisé en ce que** le système sert à :
surveiller, sensiblement en continu, une grandeur du couple appliqué par le conducteur au volant de direction (170) ; et
fournir la rétroaction en fonction d'un paramètre de rétroaction qui indique un comportement de direction du conducteur pendant une période antérieure à la fourniture de la rétroaction, ledit paramètre de rétroaction étant déterminé en fonction d'un signal indiquant la grandeur du couple appliqué au volant de direction (170) par le conducteur pendant ladite période,
le système servant à fournir une rétroaction par application d'un couple opposé au volant de direction (170) dans un sens opposé au changement de voie, la valeur du couple opposé étant déterminée en fonction du paramètre de rétroaction.

2. Système selon la revendication 1, ledit paramètre de rétroaction comprenant une densité spectrale de puissance moyenne d'un signal de sortie de capteur de couple pendant ladite période.

3. Système selon l'une quelconque des revendications précédentes, configuré pour surveiller la position du véhicule (100) par rapport à la première voie au moyen d'un dispositif de caméra (150).

4. Système selon la revendication 3, servant à déterminer, au moyen du dispositif de caméra (150), une position du véhicule (100) à l'intérieur de la première voie ; une largeur de la première voie ; et une courbure de la voie.

5. Système selon l'une quelconque des revendications précédentes, servant en outre à surveiller une entrée de direction du conducteur, le système servant à détecter une intention du conducteur du véhicule (100) de passer de la première voie à la deuxième voie en fonction au moins en partie de l'entrée de direction du conducteur.

6. Système selon l'une quelconque des revendications précédentes, servant à détecter une intention du conducteur du véhicule (100) de passer de la première voie à la deuxième voie en fonction au moins en partie du fonctionnement d'un indicateur de changement de direction de véhicule.

7. Système selon l'une quelconque des revendications précédentes, servant à fournir une rétroaction au conducteur lorsque le système détecte une intention du conducteur de passer de la première voie à la deuxième voie et que le système détecte la présence de l'obstacle dans la deuxième voie par le travers du véhicule (100).

8. Système selon l'une quelconque des revendications précédentes, servant à fournir une rétroaction au conducteur lorsque le système détecte une intention du conducteur de passer de la première voie à la deuxième voie et que le système détecte la présence de l'obstacle dans la deuxième voie dans les limites d'une distance prescrite du véhicule (100) en question.

9. Système selon la revendication 7 ou 8, servant à déterminer si l'obstacle présente un risque de collision en fonction d'un emplacement et d'une vitesse de déplacement relatifs de l'obstacle.

10. Système selon l'une quelconque des revendications précédentes, servant à fournir une rétroaction sous la forme d'une alerte sonore et/ou visuelle.

11. Système selon l'une quelconque des revendications précédentes, servant à fournir une rétroaction par réduction d'une quantité d'assistance de couple dans le sens du changement de voie.

12. Véhicule à moteur (100) comprenant un système selon l'une quelconque des revendications précédentes.

13. Procédé permettant d'éviter une collision dans le sens latéral entre des véhicules, mis en oeuvre par un système de commande, le procédé consistant à :
surveiller une position d'un véhicule (100) par rapport à une première voie d'une route occupée par le véhicule (100) ;
détecter l'existence d'un obstacle représentant un risque de collision dans une deuxième voie adjacente à la première ;
détecter une intention du conducteur du véhicule (100) de passer de la première voie à la deuxième voie, et
fournir une rétroaction au conducteur, par l'application d'une force à un volant de direction (170) du véhicule (100) si un risque de collision existe dans la deuxième voie et une intention du conducteur de passer de la première voie à la deuxième voie est détectée,
**caractérisé en ce que** le procédé consiste à :
surveiller, sensiblement en continu, une grandeur du couple appliqué par le conducteur au volant de direction (170) ;
déterminer un paramètre de rétroaction qui indique un comportement de direction du conducteur pendant une période antérieure à la fourniture de la rétroaction, en fonction d'un signal indiquant la grandeur du couple appliqué au volant de direction (170) par le conducteur pendant ladite période ; et
fournir une rétroaction en fonction dudit paramètre de rétroaction par application d'un couple opposé au volant de direction (170) dans un sens opposé au changement de voie, la valeur du couple opposé étant déterminée en fonction du paramètre de rétroaction.
